# EUROPEAN PATENT SPECIFICATION

(11) **EP 1 743 450 B1**
(45) Date of publication and mention of the grant of the patent: **07.06.2017**
(21) Application number: 05736076.0
(22) Date of filing: 20.04.2005
(51) Int. Cl.: H04W 92/12, H04L 12/18

(54) **OPTIMISED IUB TRANSPORT**
OPTIMIERTER IUB-TRANSPORT
TRANSPORT IUB OPTIMISE

(30) Priority: 07.05.2004 SE 0401211
(43) Date of publication of application: 17.01.2007
(73) Proprietor: Telefonaktiebolaget LM Ericsson (publ), 164 83 Stockholm (SE)
(72) Inventor: SAGNE , Jacques, F-31310 Montesquieu Volvestre (FR); EDLUND, Peter, Hans, S-147 33 Tumba (SE); BERGSTRÖM, Joakim, Karl, Olof, S-114 30 Stockholm (SE)
(74) Representative: Brann AB
(86) International application number: PCT/SE2005/000573
(87) International publication number: WO 2005/109750

(56) References cited:
- WO-A1-2004/002184
- WO-A1-2004/043023
- US-A1- 2003 174 678
- US-A1- 2004 022 218
- US-A1- 2005 043 035

## Description

### TECHNICAL FIELD OF THE INVENTION

The present invention relates to optimised transmission of one media stream in a plurality of cells served by the same base station device, the media stream transported from a radio network controller over an Iub interface to the base station device and comprising multimedia data, e.g. within an MBMS (Multimedia Broadcast/Multicast Service) of the 3GPP (Third Generation Partnership Project).

### BACKGROUND OF THE INVENTION

The 3GPP-standard relates to technology based on radio access networks such as the UTRAN (the Universal Mobile Telecommunications (UMTS) Terrestrial Radio Access Network), which is a radio access network architecture providing W-CDMA (Wideband Coding Division Multiple Access) to mobile terminals. Telecommunication systems according to the 3GPP-standard offer higher transmission bitrates, high service flexibility and multiple simultaneous connections to mobile terminals, and are capable of providing new types of services to the users. The MBMS included in the 3GPP-standard provides broadcasting/ /multicasting of various multimedia information to users, enabling information providers to transmit multimedia information, such as real-time audio and video, still images and text, e.g. news, sport results and weather forecasts, to several joined MBMS subscribers simultaneously.

In a telecommunication system according to the 3GPP-standard, a UE, i.e. a mobile terminal such as e.g. a cellular telephone provided with a SIM (Subscriber Identity Module)-card, communicates with a core network connected to external networks, e.g. the Internet and the PSTN (the Public Switched Telephone Network), via a UTRAN covering a geographical area divided into cells with unique identities. Each cell is served by a base station device, which in the 3GPP is referred to as a Node B, and radio coverage of a cell is provided by a base transceiver station at the serving base station (i.e. Node B) site over an Uu-interface. One Node B is normally serving more than one cell, and the Node Bs are controlled by RNCs (Radio Network Controllers), which are managing the transmission resources of the UTRAN. The Node Bs are communicating with the RNCs over an Iub-interface, the RNCs are communicating with the core network over an Iu-interface, and the communication between RNCs is performed over an Iur-interface.

In an MBMS according to 3GPP, multimedia information may be transmitted in a broadcasting mode or in a multicasting mode. In the broadcasting mode, the same media stream is broadcasted simultaneously to several users, without taking into account whether any terminal is actually receiving the media stream. In the multicasting mode, two different transmission schemes may be used, either the point-to-point (PTP) scheme, in which data is delivered to each user individually, using a dedicated traffic channel, or the PTM scheme, in which the same media stream is broadcasted on a common channel, which is received simultaneously by a plurality of selected mobile terminals. In the PTM mode, duplication of the same content on different radio bearers is avoided and transmission resources are saved, while in the PTP mode, the transmission power overhead required for transmission on a common channel is avoided.

A network architecture for providing an MBMS to several mobile terminal users, which have joined the MBMS and are located in cells served by a common Node B, comprises a BM-SC (Broadcast/Multicast-Service Center) as a source for scheduling the MBMS streams for delivery to a Serving GPRS Support Node (SGSN) using suitable transmitting means, the SGSN being configured with a Gateway GPRS Support Node (GGSN). A radio network controller, RNC, supervising the Node B receives the MBMS stream from the SGSN for transmission to the Node B over an Iub interface, and the base transceiver stations of a Node B forwards the MBMS stream over an air interface to the MBMS-joined mobile terminals located in the cells served by the Node B.

In multimedia services within MBMS of the 3GPP, MBMS Cell Groups (MBMS CGs) can be defined regarding the PTM transmission of MBMS data. An MBMS Cell Group comprises a group of cells sharing the same PDCP (Packet Data Convergence Protocol) and RLC (Radio Link Control) within an RNS (Radio Network Subsystem), and is identified by an MBMS Cell Group Identifier (MBMS CG-Id). By means of the MBMS CG-Id, all cells of the MBMS Cell Group are able to receive MBMS data transmitted according the PTM scheme.

The scheduling of the MBMS data transport is performed by an MAC-layer (Media Access Control-layer) of the UMTS, and more specifically by means of the MAC-m functionality located in the MAC c/sh (common/shared). Identical MBMS data blocks transmitted over the air interface to mobile terminals located in different cells may be scheduled according to a tight scheduling scheme, i.e. scheduled to be transmitted within a limited and relatively small time period. Thereby, a mobile terminal that receives an identical data block transmitted in more than one cell will be able to use advanced combining techniques to compensate for the power loss of the radio signal during transmission. However, tight scheduling is not always possible for all the cells of an MBMS Cell Group, e.g. due to cell congestion status and scheduling limitations etc. The cells within an MBMS Cell Group that can be scheduled according to a tight scheduling scheme are hereinafter defined as a Cell Group Subset, and when an MBMS Cell Group is composed of several Cell Group Subsets, MAC-m buffering may be required. Scheduling according to a tight scheduling scheme of identical MBMS data blocks to be transmitted approximately simultaneously in cells belonging to the same Cell Group Subset is hereinafter defined as common scheduling.

In the prior art, identical MBMS data blocks to be transmitted in cells belonging to the same Cell Group Subset and within a limited, small time period, such as 1 TTI (Transmission Time Interval), are copied in the RNC into one separate FACH data frame (Forward Access Channel data frame) for each cell served by the Node B. The RNC sends each separate FACH data frame over the Iub interface, resulting in the transmission of several identical MBMS data blocks over the Iub interface to the same Node B, i.e. a "parallel" Iub transport. After receiving the FACH data frame for each cell, the Node B will create a separate MBMS data stream for each cell and transmit on a forward access channel (FACH) for reception by MBMS-joined mobile terminals located in the cells. The transmission over the Iub interface between the RNC and the Node Bs is performed according to the PTP mode, i.e. the multimedia service data is transmitted individually between the RNC and the Node Bs, which leads to a transmission of identical multimedia content in a plurality of data frames over the Iub interface, and to an inefficient use of transport resources.

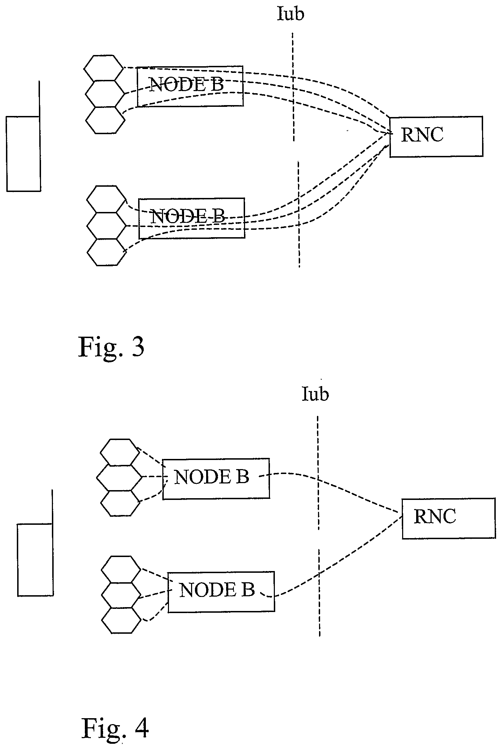

Figure 3 illustrates an example of the above-described "parallel" Iub transport according to prior art, in which the same MBMS data block is transmitted six times from one RNC to six cells of a Cell Group Subset of the MBMS service area, via two Node Bs. Each Node B serves three cells, and the RNC will copy the MBMS data block into six separate Iub FACH frames to be transmitted according to the point-to-point scheme individually over the Iub-interface between the RNC and the Node Bs. Upon reception, each Node B will transmit an MBMS data stream on a FACH in the three cells handled by that Node B, in case any MBMS-joined mobile terminal is located therein. Since the separate data frames are handled independently by the Node B before transmission in the cells, a relative offset is introduced in the timing of the TTIs in each cell.

Thus, the prior art involves several drawbacks, such as e. g. an inefficient use of available Iub transport resources and a relative offset between the cells in the timing to the TTIs in the transmission of identical multimedia service data streams from a radio network controller into a plurality of cells served by the same base station device and scheduled according to a tight scheduling scheme.

US-A-2004/022218 discloses a know method in a radio network controller within a radio access network for transmitting common multimedia service (MBMS) data blocks over an Iub interface between the RNC and a base station device serving a plurality of cells in which multimedia service joined mobile terminals are located.

### DESCRIPTION OF THE INVENTION

It is an object of the present invention to achieve an improved utilization of available Iub transport resources and a small relative offset between the cells in the timing to the TTIs, providing an improved transmission of identical multimedia service streams approximately simultaneously from a radio network controller over the Iub interface to mobile terminals located in a plurality of cells served by the same base station device, facilitating use of advanced combining techniques, such as e. g. soft-combining. More specifically, an object of the invention is to provide an optimised transmission of identical MBMS data blocks of the 3GPP approximately simultaneously from a radio network controller (RNC) over the Iub interface to a plurality of cells of a Cell Group Subset served by the same Node B.

These and other objects are achieved by the method in a radio network controller, by the corresponding method in a base station device, by the radio network controller and by the base station device according to the attached claims. The independent claim of a method in a radio network controller relates to a method performed in a transmitting node in a common Iub transport and the independent claim of a method in a base station device relates to a method performed in the corresponding receiving node in said common Iub transport. The independent claim of a radio network controller relates to a transmitting node in a common Iub transport and the independent claim of a base station device relates to the corresponding receiving node in a common Iub transport.

The claims relate to a method in a radio network controller (RNC) within a radio access network for transmitting common multimedia service data blocks over an Iub interface between the radio network controller and a base station device serving a plurality of cells in which multimedia service joined mobile terminals are located, wherein a common Iub transport is used for transmitting said common multimedia service data blocks. The method comprises the steps of storing the common multimedia service data blocks in one single data frame, including in the single data frame, separately for each of said plurality of cells, a time to send the common multimedia service blocks to that cell, and transmitting said single data frame over the Iub interface to the base station device, which is configured to duplicate said common multimedia service data blocks into separate multimedia service data streams for each of said plurality of cells.

The claims also relates to a method in a base station device within a radio access network for transmitting common multimedia service data blocks received over an Iub interface from a radio network controller (RNC), said base station device serving a plurality of cells in which multimedia service joined mobile terminals are located, wherein a common Iub transport is used for transmitting said common multimedia data blocks. The method comprises the steps of receiving a single data frame from the radio network controller, the data frame comprising said common multimedia service data blocks, the single data frame comprising, separately for each of said plurality of cells, a time to send the common multimedia service blocks to that cell, storing said common multimedia service data blocks, and duplicating said common multimedia service data blocks into separate multimedia service data streams for transmission in each of said plurality of cells, and transmitting each multimedia data stream in each of said plurality of cells at the time indicated in the single data frame for each cell.

The claims further relates to a radio network controller (RNC) in a radio access network, arranged to communicate over an Iub interface with a base station device serving a plurality of cells. The radio network controller comprises means for transmitting common multimedia service data blocks to multimedia service joined mobile terminals located in said cells. The radio network controller comprises means for storing said common multimedia service data blocks into a single data frame, and means for transporting said single data frame over the Iub interface to a base station device for duplication and transmission in each of said cells. The radio network controller is configured to include in the single data frame, separately for each of said plurality of cells, a time to send the common multimedia service blocks to that cell.

The claims also relates to a base station device serving a plurality of cells in a radio access network, and arranged to communicate over an Iub interface with a radio network controller (RNC). The base station device comprises means for receiving multimedia service data blocks from said radio network controller and for transmitting a multimedia service data stream to multimedia service joined mobile terminals located in said cells. Said means are arranged to receive a single data frame comprising common multimedia service blocks transferred over the Iub interface and to create separate multimedia service data streams comprising said common multimedia service blocks for transmission in each of said cells. The single data frame comprises, separately for each of said plurality of cells, a time to send the common multimedia service blocks to that cell. The base station device is configured to transmit each multimedia data stream in each of said plurality of cells at the time indicated in the single data frame.

Said single data frame transporting said common multimedia service data blocks over the Iub interface may be a multimedia service data frame, which is transmitted over the Iub interface in connection with a non-multimedia service FACH data frame provided with an indicator for said multimedia service data frame.

Alternatively, said single data frame transporting said common multimedia service data blocks over the Iub interface may be an extended FACH data frame.

Said radio access network may be a UTRAN (Universal Mobile Telecommunications Terrestrial Radio Access Network), said multimedia service may be a Multimedia Broadcasting/Multicasting
Service (MBMS) according to the 3GPP standard and said base station device may be a Node B of the 3GPP.

Other features and further advantages of the invention will be apparent from the following description and figures, as well as from the attached claims.

### BRIEF DESCRIPTION OF THE DRAWINGS

The present invention will now be described in more detail and with reference to the embodiments and to the drawings, of which:
Figure 1 schematically illustrates a third generation mobile communication system,
figure 2 schematically illustrates the forwarding of an MBMS stream via two RNCs to a number of cells served by Node Bs.
figure 3 schematically illustrates the parallel Iub-transport according to the prior art,
figure 4 schematically illustrates the common Iub-transport according to the present invention,
figure 5 illustrates the layout of an MBMS data frame according to a first embodiment of the invention,
figure 6 is an example of an MBMS data frame structure according to the first embodiment,
figure 7 illustrates a prior art FACH data frame,
figure 8 illustrates the layout of a non-MBMS FACH data frame according to a first embodiment of the invention
figure 9 is a flow chart of steps comprised in a first embodiment of the Iub-transporting procedure according to the invention,
figure 10 illustrates the layout of an extended FACH data frame, according to a second embodiment of the invention, and figure 11 is a flow chart of the steps in a second embodiment of an Iub-transporting procedure according to the invention.

### DESCRIPTION OF PREFERRED EMBODIMENTS

The terms and expressions used in the description and in the claims are intended to have the meaning normally used by a person skilled in the art, and the following abbreviations will be used:
3GPP: Third Generation Partnership Protocol
UTRAN: UMTS Radio Access Network
UMTS: Universal Mobile Telecommunications
MBMS: Multimedia Broadcast/Multicast Service
RNC: Radio Network Controller
BTS: Base Transceiver Station
RRC: Radio Resource Control
RNS: Radio Network Subsystem
RLC: Radio Link Control
PDCP: Packet Data Convergence Protocol
CG: Cell Group
FACH: Forward Access Channel
SGSN: Serving GPRS Support Node
CFN: Connection Frame Number
RAN: Radio Access Network
URA: UTRAN Registration Area
PTP: Point To Point
PTM: Point To Multipoint
MCCH: MBMS Control Channel
MAC: Media Access Control
GPRS: General Packet Radio Service
PDU: Protocol Data Unit

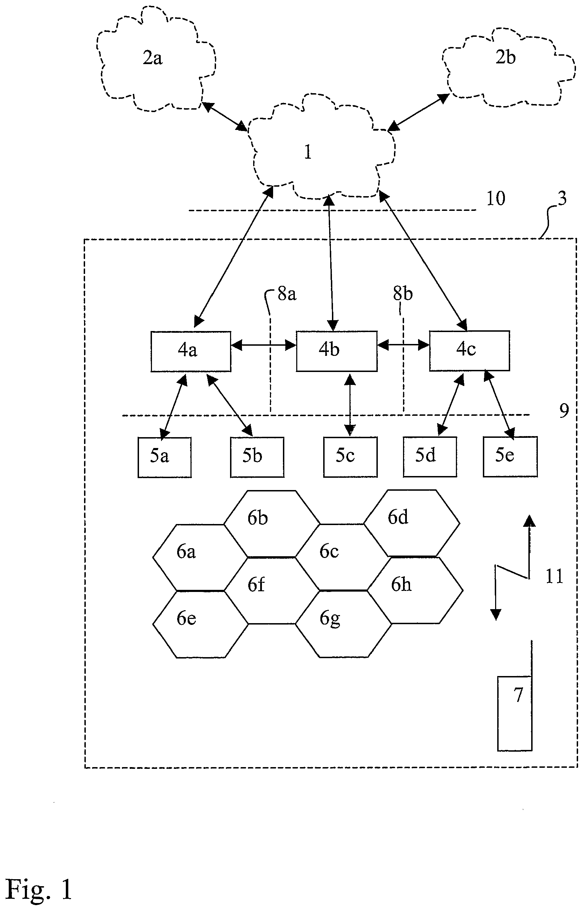

Figure 1 illustrates a third generation mobile communication system, comprising a core network 1 and a UTRAN 3, in which the core network 1 provides connections to the external networks 2a and 2b, e.g. the Internet, a PSTN (Public Switched Telephone Network), or other mobile networks. The core network 1 is also connected to the UTRAN 3 over an Iu-interface 10, said UTRAN comprising a plurality of RNCs 4a, 4b, 4c, which are interconnected by means of Iur-interfaces 8a and 8b. The RNCs each supervises a number of Node Bs 5a, 5b, 5c, 5d, 5e over an Iub interface 9, and each Node B handles the radio access within one or more cells 6a, 6b, 6c, 6d, 6e, 6f, 6g, 6h. A mobile terminal 7 may move between cells, and communicates over an air interface 11 (i.e. a Uu-interface), where the radio coverage in each cell is provided by base transceiver stations (not shown) of a specific Node B.

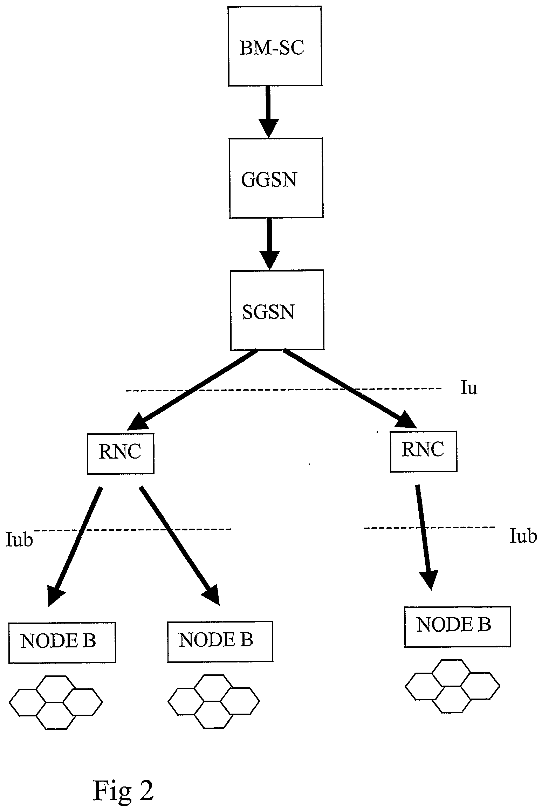

Figure 2 shows schematically the conventional node architecture for providing an MBMS stream into a plurality of cells, comprising a BM-SC (Broadcast/Multicast-Service Center) as a source for scheduling the MBMS streams. The MBMS stream is forwarded to SGSN (Serving GPRS Support Node) via a GGSN (Gateway GPRS Support Node). In this example, two RNCs receive the MBMS stream over Iu interfaces from the SGSN, to be forwarded to the Node Bs supervised by each RNC over an Iub interface, for transmission to MBMS-joined mobile terminals (not shown) located in the cells by said Node Bs, the transmission over the air interface performed by the BTS (Base Transceiver Station) (not shown) of each cell.

In the prior art regarding transmission of identical MBMS data block in cells of a Cell Group Subset served by the same Node B, the transmission scheduled according to a tight scheduling scheme, i.e. transmission to be performed approximately simultaneously, the RNC copies and sends the MBMS data block over the Iub interface in one separate FACH data frame for each cell. Consequently, several identical MBMS data blocks will be transmitted in separate data frames within a small time interval to the same Node B over the Iub interface, i.e. "parallel" Iub transport of MBMS data blocks, which introduces a timing offset in the TTIs between the cells.

According to this invention, an improved Iub transport is achieved by a common transport over the Iub interface of identical MBMS data blocks to be transmitted within a relatively small time interval in a plurality of cells belonging to the same Cell Group Subset, served by the same Node B. The present solution involves a common Iub transport of a MBMS data block from an RNC to the Node B, in the case of tight scheduling of identical MBMS data in cells belonging to the same Cell Group Subset and served by the same Node B. Scheduling according to a tight scheduling scheme of identical MBMS data blocks to be transmitted approximately simultaneously in cells belonging to the same Cell Group Subset is hereinafter defined as common scheduling. The common MBMS data blocks are packed into one single data frame, which is transported over the Iub interface and received by the Node B. The Node B duplicates the common MBMS data blocks and creates a plurality of separate data streams, each comprising the common MBMS data blocks, for transmission on a forward access channel (FACH) in the cells of the Cell Group Subset in which MBMS-joined mobile terminals are located.

In the "parallel" Iub transport illustrated in figure 3, the same MBMS data block is transmitted six times from one RNC to six cells of a Cell Group Subset of the MBMS service area, via two Node Bs. Each Node B serves three cells, and the RNC will copy the MBMS data block into six separate Iub FACH frames to be transmitted according to the point-to-point scheme individually over the Iub-interface between the RNC and the Node Bs. Upon reception, each Node B will transmit an MBMS data stream on a FACH in the three cells handled by that Node B, in case any MBMS-joined mobile terminal is located therein, which will introduce a relative offset between the cells in the timing of the TTIs. This example illustrates the inefficient use of the transport resources and the spreading of the TTIs caused by the sending of three identical MBMS data block between the same nodes, by means of the parallel Iub-transport procedure according to prior art.

Figure 4 illustrates one embodiment of a common Iub transport procedure according to this invention, in which the common MBMS data block is transmitted in a single data frame only once over the Iub interface between the RNC and each of the Node Bs. According to the embodiment illustrated in figure 4, each Node B serves three cells, and upon reception, each Node B will copy said common MBMS data block into separate data streams to be transmitted in each of the three cells served by the Node B, being part of an MBMS Cell Group Subset.

The common Iub transport procedure according to this invention may be implemented by means of two different schemes. In a first embodiment, the common Iub transport is implemented according to a scheme introducing an MBMS data frame to be transmitted over the Iub interface in connection with the transmission of a standard non-MBMS FACH data frame. In a second embodiment, the common Iub transport is implemented according to a scheme introducing an extended FACH data frame for transport of common MBMS data.

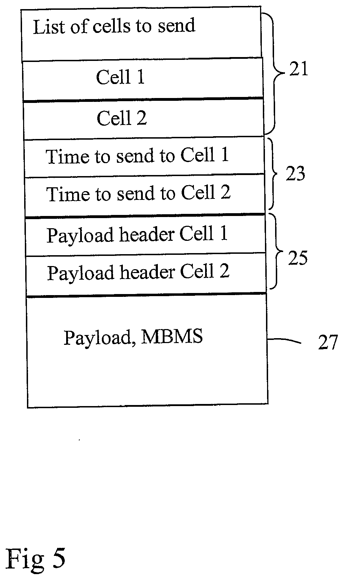

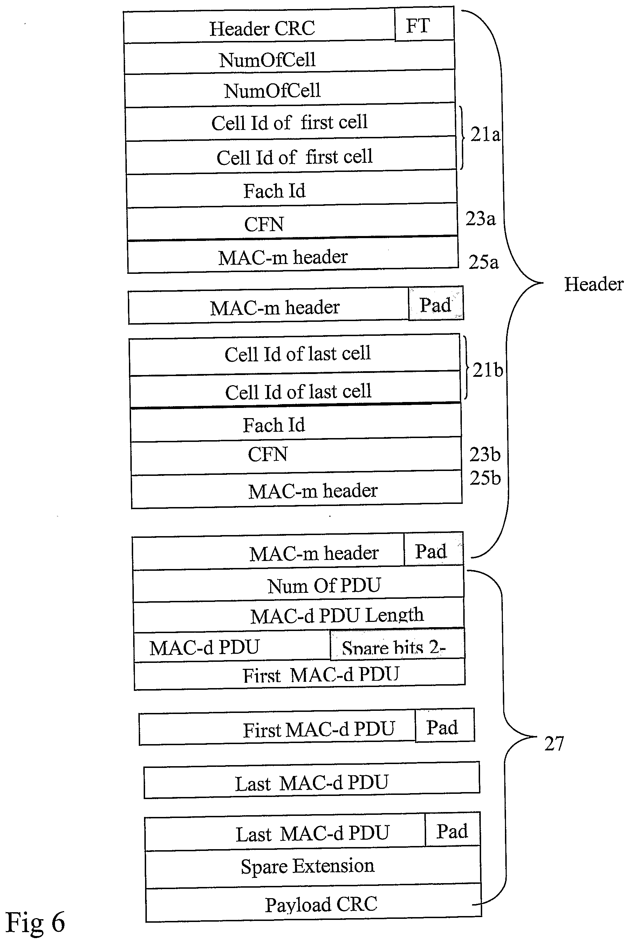

The first embodiment of the invention introduces an MBMS data frame for transmission of common MBMS data over the Iub interface between an RNC and a Node B, where the MBMS data is to be transmitted approximately simultaneously in more than one cell of a Cell Group Subset served by the Node B. A layout of an MBMS data frame according to the invention is illustrated in figure 5, and comprises a list 21 of the cells to which the MBMS data shall be sent, the time 23 to send the MBMS data to each cell, a header 25 for the payload (i.e. the MBMS data) to be sent in each of the cells, and the payload 27 itself, including the MBMS data. The layout in figure 5 only comprises two cells, Cell 1 and Cell 2, but the number of cells may be much larger, up to 100 cells, or even more. Figure 6 illustrates an exemplary structure of an MBMS data frame according to the first embodiment of the invention, corresponding to the layout of figure 5. The frame in Figure 6 includes a list 21 of the cells, of which only the first cell 21a and the last cell 21b are included; the time to send the first cell in the first CFN 23a (Connection Frame Number) and the time to send the last cell in the last CFN 23b; the headers for the payload to be sent for the first cell 25a, and for the last cell 25b, and the MBMS payload 27. The contents of the other fields of the exemplary structure illustrated in figure 6 are conventional, and not necessary to describe any further.

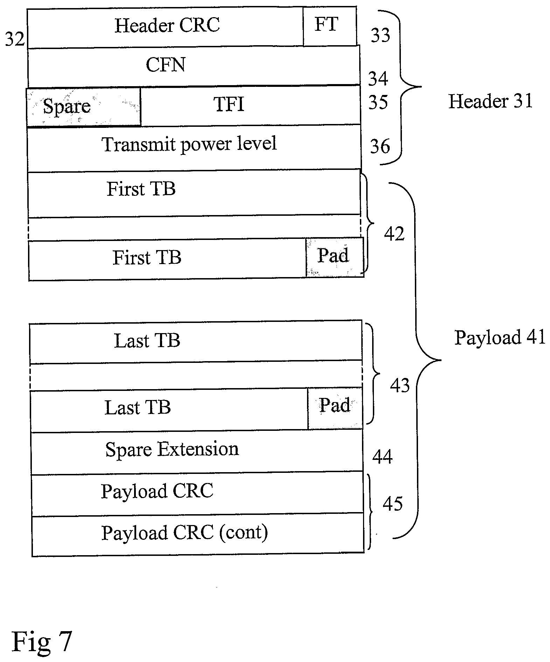

A non-MBMS FACH data frame is transmitted in connection with the MBMS data frame according to this embodiment of the invention, i.e. the non-NBNS FACH data frame is transmitted approximately simultaneously with the MBMS data frame. A prior art FACH data frame structure, such as an R99bis-FACH data frame, is shown in figure 7, including a header 31 and a payload 41. The fields of the conventional header comprises a Header CRC 32 (Cyclic Redundancy Checksum) calculated on the header, FT 33 (Frame Type), which may be Data or Control, CFN 34 (Connection Frame Number), indicating which downlink radio frame to transmit the first data, TFI 35 (Transport Format Indicator), indicates the local number of the transport format used for the transmission time interval, and the Transmit Power Level 36 preferred during the TTI for the corresponding transport channel. The fields of the conventional Payload 41 comprises TBs 42, 43 (Transport Blocks), which are blocks of data to be transmitted over the radio interface, Spare Extension 44, which indicates the location where next IEs (Information Elements) may be added in a backward compatible way, and the Payload CRC 45, which is a Cyclic Redundancy Checksum calculated on the payload of the data frame.

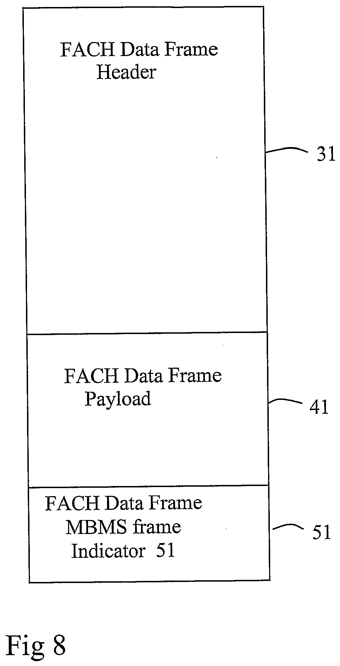

A layout of a non-MBMS FACH data frame according to this invention is illustrated in figure 8, comprising a conventional header 31 and payload 41, which both are described in detail in connection with figure 7, and further provided with an MBMS data frame indicator 51. The RNC will set the MBMS indicator 51 in the non-MBMS FACH data frame if an MBMS data frame is to be transmitted over the Iub interface in connection with the non-MBMS FACH data frame, i.e. within a limited time interval. If the MBMS data frame indicator is set, the Node B will combine MBMS data of a received MBMS data frame with the data received in the non-MBMS FACH data frame.

When the Node B receives an MBMS data frame transmitted from the RNC over the Iub interface, it will store the payload therein, i.e. the MBMS data block, and check the header information for each cell. Thereafter, the Node B will create a FACH data stream, including the MBMS data blocks, for each cell in which the MBMS data shall be forwarded to MBMS joined mobile terminal. Potential additional headers and other data are added to the FACH data stream, which is transmitted on a FACH at the time indicated in the CFN field in the MBMS data frame. After transmitting FACH data streams, including the common MBMS data block, to all the cells indicated in the MBMS data frame, the Node B will delete the stored MBMS data blocks.

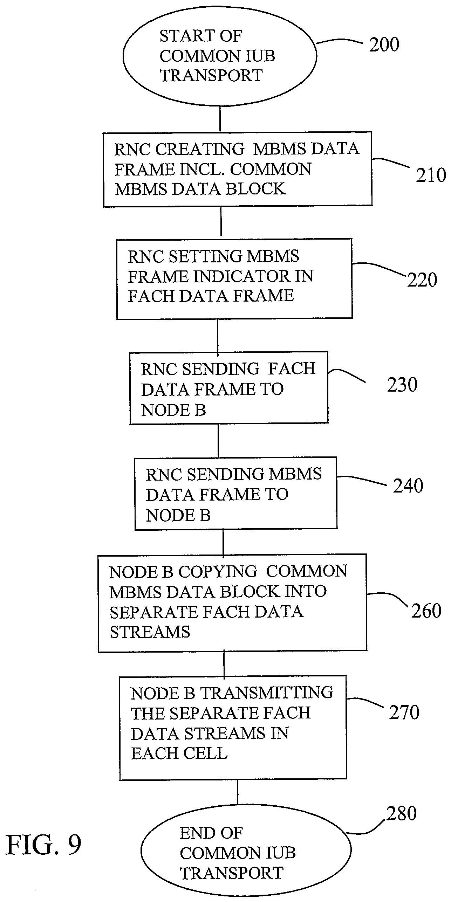

Figure 9 is a flow chart of the common Iub transport according to the above-described first embodiment of the invention, in which an MBMS data frame is introduced. The flow chart describes steps performed when a radio network controller receives MBMS data from the core network to be transmitted to several MBMS-joined terminals, located in a plurality of cells served by one Node B, which is controlled by the radio network controller. Common (simultaneous) scheduling can be used for the transmission in cells belonging to the same Cell Group Subset, and the RNC initiates a common Iub transport procedure in step 200, and creates an MBMS data frame for transporting the common MBMS data block over the Iub interface in step 210. In step 220, the RNC sets the MBMS data frame indicator in the non-MBMS FACH data frame to indicate to the receiving Node B that an MBMS data frame will be transmitted in connection with the non-MBMS FACH data frame. In step 230, the non-MBMS FACH data frame is transmitted over the Iub interface to the Node B, and in step 240 the MBMS data frame is transmitted to the Node B. In step 260, upon reception of the MBMS data frame, the Node B will store and copy the MBMS data block of the MBMS data frame, and create separate FACH data streams, including the common MBMS data block, for each cell in which MBMS joined mobile terminals are located. In step 270, the Node B transmits the separate FACH data streams over the air interface in each of the cells.

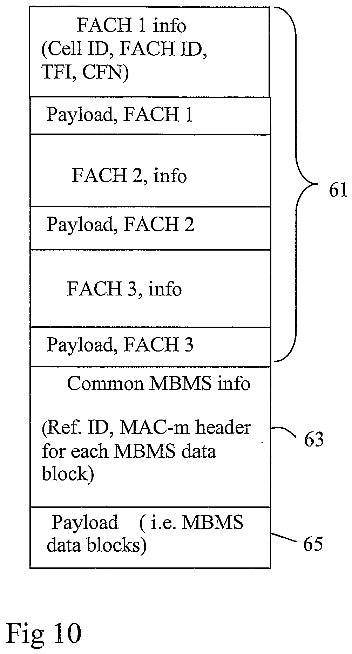

The second embodiment of the invention implements the common Iub transport from an RNC to a Node B by means of an updated, extended FACH data frame, and a layout of the extended FACH data frame according to this invention is illustrated in figure 10. The extended FACH data frame transports common MBMS data to be transmitted in separate FACH streams in different cells belonging to one Cell Group Subset and served by the Node B. The extended FACH data frame comprises a first loop 61 of all the FACH streams to be transmitted, indicating the Cell ID, FACH ID, TFI (Transmit Power Level) and CFN, as well as a Payload with other transport blocks to be transmitted in the cell (e.g. non-MBMS data blocks) by each of the FACH streams of the loop. The extended FACH data frame also comprises a second loop 63 with the headers for each of the common MBMS data blocks to be transmitted in each FACH stream, indicating a reference ID and a MAC-m header for each MBMS data block of the loop. The extended FACH data frame further includes a third loop 65 with the payload of the MBMS data blocks to be transmitted, indicating for each MBMS data block the number of TBs (Transport Blocks), the length of the TBs, and the content of the TB.

When an extended FACH data frame transmitted over the Iub interface is received by the Node B, the Node B will create separate FACH data streams to be transmitted in each cell of the cells. The Node B will append the correct MAC-m to the corresponding MBMS data blocks and transmit these blocks and non-MBMS data blocks simultaneously by transmitting individual FACH data streams in each cell over an air interface, to be received by MBMS-joined mobile terminals located in the cells.

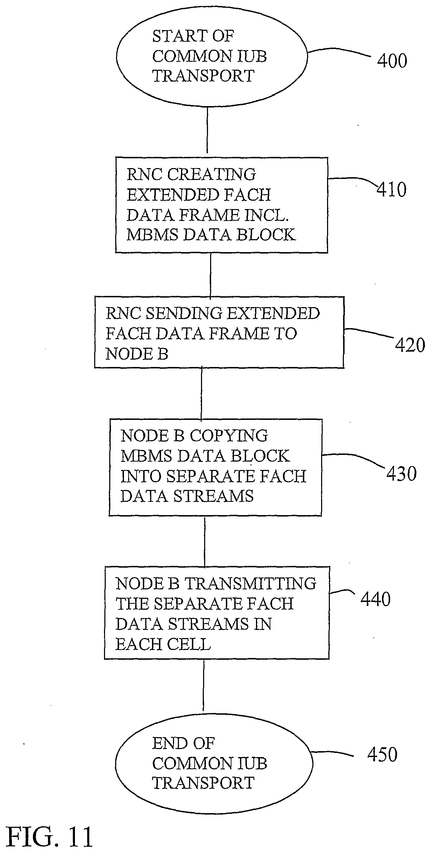

Figure 11 shows a flow chart of the common Iub transport according to the above-described second embodiment of the invention, in which common MBMS data blocks are transported on the Iub interface by means of an extended FACH data frame, as illustrated in figure 10. The flow chart describes steps performed when a radio network controller receives MBMS data from the core network to be transmitted to several MBMS-joined terminals, located in a plurality of cells served by one Node B controlled by the radio network controller. Common (i.e. tight) scheduling can be used for the transmission to cells belonging to the same Cell Group Subset, and the RNC initiates a common Iub transport procedure in step 400, and creates an extended FACH data frame to include the common MBMS data blocks to be transported over the Iub interface in step 410. In step 420, the RNC sends the extended FACH data frame to the Node B. Upon reception of the extended FACH data frame, the Node B, in step 430, stores and copies the MBMS data blocks of the extended FACH data frame, and create separate FACH data streams for each cell. In step 440, the BTS of the Node B transmits the individual FACH data streams in each cell, to be received by the MBMS-joined mobile terminals located therein.

By employing the common Iub transport of identical MBMS data according to this invention a more efficient use of the Iub transporting resources and a "tighter" scheduling is accomplished if more than one cell served by one Node B shall receive identical and common MBMS data approximately simultaneously, thereby facilitating use of advanced combining techniques when a mobile terminal receives identical data blocks from more than one BTS, i.e. transmitted in more than one cell.

The invention has been described with reference to specific exemplary embodiments and figures only to illustrate the inventive concept, and the invention is not limited to the disclosed embodiments. Instead, the invention is intended to cover various modification within the scope of the appended claims.

## Claims

1. A method in a radio network controller (RNC) (4a-c) within a radio access network (3) for transmitting common multimedia service data blocks over an Iub interface (9) between the radio network controller and a base station device (5a-e) serving a plurality of cells (6a-h) in which multimedia service joined mobile terminals (7) are located, wherein a common Iub transport is used for transmitting said common multimedia service data blocks, comprising the steps of:
- storing (210, 410) the common multimedia service data blocks in a single data frame
- including in the single data frame, separately for each of said plurality of cells (6a-h), a time to send the common multimedia service blocks to that cell; and
- transmitting (240, 420) said single data frame over the Iub interface to the base station device, which is configured to duplicate said common multimedia service data blocks into separate multimedia service data streams for each of said plurality of cells.

2. A method in a radio network controller according to claim 1, **characterized in that** the transmission of said common multimedia service blocks is scheduled according to common scheduling.

3. A method in a radio network controller according to claim 1 or 2, **characterised in that** said single data frame transporting said common multimedia service data blocks over the Iub interface is a multimedia service data frame, which is transmitted over the Iub interface in connection with a non-multimedia service FACH data frame provided with an indicator for said multimedia service data frame.

4. A method in a radio network controller according to claim 1 or 2, **characterised in that** said single data frame transporting said common multimedia service data blocks over the Iub interface is an extended FACH data frame.

5. A method in a base station device (5a-e) within a radio access network (3) for transmitting common multimedia service data blocks received over an Iub interface (9) from a radio network controller (RNC) (4a-c), said base station device serving a plurality of cells (6a-h) in which multimedia service joined mobile terminals (7) are located, wherein a common Iub transport is used for transmitting said common multimedia data blocks, comprising the steps of:
- receiving a single data frame from the radio network controller, the data frame comprising said common multimedia service data blocks, the single data frame comprises, separately for each of said plurality of cells (6a-h), a time to send the common multimedia service blocks to that cell;
- storing said common multimedia service data blocks, and
- duplicating (260, 430) said common multimedia service data blocks into separate multimedia service data streams for transmission (270, 440) in each of said plurality of cells; and
- transmitting each multimedia data stream in each of said plurality of cells (6a-h) at the time indicated in the single data frame for each cell.

6. A method in a base station device, according to claim 5, **characterized in that** the transmission of said common multimedia service blocks is scheduled according to common scheduling.

7. A method in a base station device, according to claim 5 or 6, **characterised in that** said single data frame transporting said common multimedia service data blocks over the Iub interface is a multimedia service data frame, which is transmitted over the Iub interface in connection with a non-multimedia service FACH data frame provided with an indicator for said multimedia service data frame.

8. A method in a base station device, according to claim 5 or 6, **characterised in that** said single data frame transporting said common multimedia service data blocks over the Iub interface is an extended FACH data frame.

9. A method according to any of the preceding claims, wherein said radio access network is a UTRAN (Universal Mobile Telecommunications Terrestrial Radio Access Network), said multimedia service is a Multimedia Broadcasting/Multicasting Service (MBMS) according to the 3GPP standard, and said base station device is a Node B of the 3GPP.

10. A radio network controller (RNC) (4a-c) in a radio access network (3) arranged to communicate over an Iub interface (9) with a base station device (5a-e) serving a plurality of cells (6a-h), the radio network controller comprising means for transmitting common multimedia service data blocks to multimedia service joined mobile terminals (7) located in said cells, comprising:
- means for storing said common multimedia service data blocks into a single data frame, and
- means for transmitting said single data frame over the Iub interface to the base station device for duplication and transmission in each of said cells; **characterized in that**:
the radio network controller (4a-c) is configured to include in the single data frame, separately for each of said plurality of cells, a time to send the common multimedia service blocks to that cell.

11. A radio network controller according to claim 10, **characterized in that** the transmission of said common multimedia service blocks is scheduled according to common scheduling.

12. A radio network controller according to claim 10 or 11, **characterised in that** said single data frame is a multimedia service data frame adapted to be transmitted over the Iub interface in connection with a FACH data frame provided with an indicator for said multimedia service data frame.

13. A radio network controller to claim 10 or 11, **characterised in that** said single data frame is an extended FACH data frame.

14. A radio network controller according to any of the claims 10-13, wherein said radio access network is a UTRAN (Universal Mobile Telecommunications Terrestrial Radio Access Network), and said multimedia service is a Multimedia Broadcasting/Multicasting Service according to the 3GPP standard, and said base station device is a Node B of the 3GPP.

15. A base station device (5a-e) serving a plurality of cells (6a-h) in a radio access network (3) and arranged to communicate over an Iub interface (9) with a radio network controller (RNC) (4a-c), the base station device comprising means for receiving multimedia service data blocks from said radio network controller and for transmitting a multimedia service data stream to multimedia service joined mobile terminals (7) located in said cells, comprising:
- means for receiving a single data frame comprising common multimedia service blocks transferred over the Iub interface, and
- means for creating separate multimedia service data streams comprising said common multimedia service blocks for transmission in each of said cells; **characterized in that**
the single data frame comprises, separately for each of said plurality of cells, a time to send the common multimedia service blocks to that cell, and **in that** the base station device (5a-e) is configured to transmit each multimedia data stream in each of said plurality of cells at the time indicated in the single data frame.

16. A base station device according to claim 15, **characterized in that** the transmission of said common multimedia service blocks is scheduled according to common scheduling.

17. A base station device according to claim 15 or 16,
**characterised in that** said single data frame is a multimedia service data frame adapted to be transmitted over the Iub interface in connection with a FACH data frame provided with an indicator for said multimedia service data frame.

18. A base station device according to claim 15 or 16,
**characterised in that** said single data frame is an extended FACH data frame.

19. A base station device according to any of the claims 15-18, wherein said base station device is a Node B of the 3GPP, said radio access network is a UTRAN (Universal Mobile Telecommunications Terrestrial Radio Access Network), and said multimedia service is a Multimedia Broadcasting/ Multicasting Service according to the 3GPP standard.

## Patentansprüche

1. Verfahren in einer Funknetzsteuerung (RNC) (4a-c) in einem Funkzugangsnetz (3) zum Übertragen gemeinsamer Mulitmediadienstdatenblöcke über eine Iub-Schnittstelle (9) zwischen der Funknetzsteuerung und einer Basisstationsvorrichtung (5a-e), die einer Mehrzahl von Zellen (6a-h) dient, in denen über Multimediadienste verbundene mobile Endgeräte (7) angeordnet sind, wobei ein gemeinsamer Iub-Transport zum Übertragen der gemeinsamen Mulitmediadienstdatenblöcke die folgenden Schritte umfasst:
- Speichern (210, 410) der gemeinsamen Mulitmediadienstdatenblöcke in einem Einzeldatenrahmen
- Einschließen einer Zeit zum Senden der gemeinsamen Multimediadienstblöcke an die Zelle in den Einzeldatenrahmen für jede aus der Mehrzahl von Zellen (6a-h) und
- Übertragen (240, 420) des Einzeldatenrahmens über die Iub-Schnittstelle an die Basisstationsvorrichtung, die dazu konfiguriert ist, die gemeinsamen Multimediadienstdatenblöcke für jede aus der Mehrzahl von Zellen in getrennte Multimdediadienstdatenströme zu duplizieren.

2. Verfahren in einer Funknetzsteuerung nach Anspruch 1, **dadurch gekennzeichnet, dass** die Übertragung der gemeinsamen Multimediadienstblöcke entsprechend einem gemeinsamen Plan geplant wird.

3. Verfahren in einer Funknetzsteuerung nach Anspruch 1 oder 2, **dadurch gekennzeichnet, dass** der Einzeldatenrahmen, der die gemeinsamen Multimediadienstdatenblöcke über die Iub-Schnittstelle transportiert, ein Multimediadienstdatenrahmen ist, der über die Iub-Schnittstelle in Verbindung mit einem Nichtmultimediadienst-FACH-Datenrahmen übertragen wird, der mit einer Anzeige für den Multimediadienstdatenrahmen versehen ist.

4. Verfahren in einer Funknetzsteuerung nach Anspruch 1 oder 2, **dadurch gekennzeichnet, dass** der Einzeldatenrahmen, der die gemeinsamen Mulitmediadienstdatenblöcke über die Iub-Schnittstelle transportiert, ein erweiterter FACH-Datenrahmen ist.

5. Verfahren in einer Basisstationsvorrichtung (5a-e) in einem Funkzugangsnetz (3) zum Übertragen gemeinsamer Multimediadienstdatenblöcke, die über eine Iub-Schnittstelle (9) von einer Funknetzsteuerung (RNC) (4a-c) empfangen wurden, wobei die Basisstationsvorrichtung einer Mehrzahl von Zellen (6a-h) dient, in denen über Multimediadienste verbundene mobile Endgeräte (7) angeordnet sind, wobei ein gemeinsamer Iub-Transport zum Übertragen gemeinsamer Multimediablöcke verwendet wird, umfassend die folgenden Schritte:
- Empfangen eines Einzeldatenrahmens von der Funknetzsteuerung, wobei der Datenrahmen die gemeinsamen Multimediadienstdatenblöcke umfasst, wobei der Einzeldatenrahmen für jede aus der Mehrzahl von Zellen (6a-h) separat eine Zeit zum Senden der Multimediadienstdatenblöcke an die Zelle umfasst;
- Speichern der Multimediadienstdatenblöcke und
- Duplizieren (260, 430) der gemeinsamen Multimediadienstdatenblöcke in separate Multimediadienstdatenströme zur Übertragung (270, 440) in jeder aus der Mehrzahl von Zellen; und
- Übertragen jedes Multimediadatenstroms in jeder aus der Mehrzahl von Zellen (6a-h) zu der in dem Einzeldatenrahmen für jede Zelle angegebenen Zeit.

6. Verfahren in einer Basisstationsvorrichtung nach Anspruch 5, **dadurch gekennzeichnet, dass** die Übertragung der gemeinsamen Multimediadienstblöcke entsprechend einer gemeinsamen Planung geplant wird.

7. Verfahren in einer Basisstationsvorrichtung nach Anspruch 5 oder 6, **dadurch gekennzeichnet, dass** der Einzeldatenrahmen, der die gemeinsamen Multimediadienstdatenblöcke über die Iub-Schnittstelle transportiert, ein Multimediadienstdatenrahmen ist, der über die Iub-Schnittstelle in Verbindung mit einem Multimediadienst-FACH-Datenrahmen übertragen wird, der mit einer Anzeige für den Multimediadienstdatenrahmen versehen ist.

8. Verfahren in einer Basisstationsvorrichtung nach Anspruch 5 oder 6, **dadurch gekennzeichnet, dass** ein Einzeldatenrahmen, der die gemeinsamen Multimediadienstdatenblöcke über die Iub-Schnittstelle transportiert, ein erweiterter FACH-Datenrahmen ist.

9. Verfahren in einer Basisstationsvorrichtung nach einem der vorstehenden Ansprüche, wobei das Funkzugangsnetz ein UTRN (Universal Mobile Telecommunications Terrestrial Radio Access Network) ist, der Multimediadienst ein MBMS (Multimedia Broadcasting/Multicasting Service) entsprechend dem 3GPP-Standard ist und die Basisstationsvorrichtung ein Node B des 3GPP ist.

10. Funknetzsteuerung (RNC) (4a-c) in einem Funkzugangsnetz (3), die eingerichtet ist, um über eine Iub-Schnittstelle (9) mit einer Basisstationsvorrichtung (5a-e), die einer Mehrzahl von Zellen (6a-h) dient, zu kommunizieren, wobei die Funknetzsteuerung Mittel zum Übertragen gemeinsamer Multimediadienstdatenblöcke an über Multimediadienste verbundene, in den Zellen angeordnete mobile Endgeräte (7) umfasst, umfassend:
- Mittel zum Speichern der gemeinsamen Multimediadienstdatenblöcke in einem Einzeldatenrahmen und
- Mittel zum Übertragen des Einzeldatenrahmens über die Iub-Schnittstelle an die Basisstationsvorrichtung zur Duplizierung und Übertragung in jede(r) der Zellen; **dadurch gekennzeichnet, dass**:
die Funknetzsteuerung (4a-c) dazu konfiguriert ist, separat für jede aus der Mehrzahl von Zellen eine Zeit zum Senden der gemeinsamen Multimediadienstdatenblöcke an die Zelle in den Einzeldatenrahmen einzuschließen.

11. Funknetzsteuerung nach Anspruch 10, **dadurch gekennzeichnet, dass** die Übertragung der gemeinsamen Multimediadienstdatenblöcke entsprechend einer gemeinsamen Planung geplant wird.

12. Funknetzsteuerung nach Anspruch 10 oder 11, **dadurch gekennzeichnet, dass** der Einzeldatenrahmen ein Multimediadienstdatenrahmen ist, der dazu angepasst ist, über die Iub-Schnittstelle in Verbindung mit einem FACH-Datenrahmen übertragen zu werden, der mit einer Anzeige für den Multimediadienstdatenrahmen versehen ist.

13. Funknetzsteuerung nach Anspruch 10 oder 11, **dadurch gekennzeichnet, dass** der Einzeldatenrahmen ein erweiterter FACH-Datenrahmen ist.

14. Funknetzsteuerung nach einem der Ansprüche 10-13, wobei das Funkzugangsnetz ein UTRN (Universal Mobile Telecommunications Terrestrial Radio Access Network) ist und der Multimediadienst ein MBMS (Multimedia Broadcasting/Multicasting Service) entsprechend dem 3GPP-Standard ist und die Basisstationsvorrichtung ein Node B des 3GPP ist.

15. Basisstationsvorrichtung (5a-e), die einer Mehrzahl von Zellen (6a-h) in einem Funkzugangsnetz (3) dient und dazu eingerichtet ist, über eine Iub-Schnittstelle (9) mit einer Funknetzsteuerung (RNC) (4a-c) zu kommunizieren, wobei die Basisstationsvorrichtung Mittel zum Empfangen von Multimediadienstdatenblöcken von der Funknetzsteuerung und zum Übertragen eines Multimediadienstdatenstroms an über Multimediadienste verbundene, in den Zellen angeordnete mobile Endgeräte (7) umfasst, umfassend:
- Mittel zum Empfangen eines Einzeldatenrahmens, der über die Iub-Schnittstelle übertragene, gemeinsame Multimediadienstdatenblöcke umfasst und
- Mittel zum Erzeugen separater Multimediadienstdatenströme, die die gemeinsamen Multimediadienstdatenblöcke umfassen, zur Übertragung in jeder der Zellen; **dadurch gekennzeichnet, dass**:
der Einzeldatenrahamen separat für jede aus der Mehrzahl von Zellen eine Zeit zum Senden der gemeinsamen Multimediadienstdatenblöcke an die Zelle umfasst, und dass die Basisstationsvorrichtung (5a-e) dazu konfiguriert ist, jeden Multimediadatenstrom in jeder aus der Mehrzahl von Zellen zu der in dem Einzeldatenrahmen angegebenen Zeit zu übertragen.

16. Basisstationsvorrichtung nach Anspruch 15, **dadurch gekennzeichnet, dass** die Übertragung der gemeinsamen Multimediadienstblöcke entsprechend einem gemeinsamen Plan geplant wird.

17. Basisstationsvorrichtung nach Anspruch 15 oder 16, **dadurch gekennzeichnet, dass** der Einzeldatenrahmen ein Multimediadienstdatenrahmen ist, der dazu angepasst ist, über die Iub-Schnittstelle in Verbindung mit einem Nichtmultimediadienst-FACH-Datenrahmen übertragen zu werden, der mit einer Anzeige für den Multimediadienstdatenrahmen versehen ist.

18. Basisstationsvorrichtung nach Anspruch 15 oder 16, **dadurch gekennzeichnet, dass** der Einzeldatenrahmen ein erweiterter FACH-Datenrahmen ist.

19. Basisstationsvorrichtung nach einem der Ansprüche 15-18, wobei die Basisstationsvorrichtung ein Node B des 3GPP ist, das Funkzugangsnetz ein UTRAN (Universal Mobile Telecommunications Terrestrial Radio Access Network) ist und der Multimediadienst ein MBMS (Multimedia Broadcasting/Multicasting Service) entsprechend dem 3GPP-Standard ist.

## Revendications

1. Procédé dans un contrôleur de réseau radio (RNC) (4a-c) au sein d'un réseau d'accès radio (3) pour transmettre des blocs de données de service multimédia communs sur une interface Iub (9) entre le contrôleur de réseau radio et un dispositif de station de base (5a-e) desservant une pluralité de cellules (6a-h) dans lesquelles se trouvent des terminaux mobiles reliés par un service multimédia (7), dans lequel un transport Iub commun est utilisé pour transmettre lesdits blocs de données de service multimédia communs, comprenant les étapes de :
- stockage (210, 410) des blocs de données multimédia communs dans une trame de données unique
- inclusion dans la trame de données unique, séparément pour chacune de ladite pluralité de cellules (6a-h), d'une heure pour envoyer les blocs de service multimédia communs à la cellule en question ; et
- transmission (240, 420) de ladite trame de données unique sur l'interface Iub au dispositif de station de base, qui est conçu pour dupliquer lesdits blocs de données de service multimédia communs en flux de données de service multimédia séparés pour chacune de ladite pluralité de cellules.

2. Procédé dans Contrôleur de réseau radio selon la revendication 1, **caractérisé en ce que** la transmission desdits blocs de service multimédia communs est programmée selon une programmation commune.

3. Procédé dans Contrôleur de réseau radio selon la revendication 1 ou 2, **caractérisé en ce que** ladite trame de données unique transportant lesdits blocs de données de service multimédia communs sur l'interface Iub est une trame de données de service multimédia, qui est transmise sur l'interface Iub en liaison avec une trame de données FACH hors service multimédia pourvue d'un indicateur pour ladite trame de données de service multimédia.

4. Procédé dans Contrôleur de réseau radio selon la revendication 1 ou 2, **caractérisé en ce que** ladite trame de données unique transportant lesdits blocs de données de service multimédia communs sur l'interface Iub est une trame de données FACH étendue.

5. Procédé dans un dispositif de station de base (5a-e) au sein d'un réseau d'accès radio (3) pour transmettre des blocs de données de service multimédia communs reçus sur une interface Iub (9) depuis un contrôleur de réseau radio (RNC) (4a-c), ledit dispositif de station de base desservant une pluralité de cellules (6a-h) dans lesquelles se trouvent des terminaux mobiles reliés par un service multimédia (7), dans lequel un transport Iub commun est utilisé pour transmettre lesdits blocs de données multimédia communs, comprenant les étapes de :
- réception d'une trame de données unique depuis le contrôleur de réseau radio, la trame de données comprenant lesdits blocs de données multimédia communs, la trame de données unique comprend, séparément pour chacune de ladite pluralité de cellules (6a-h), une heure pour envoyer les blocs de service multimédia communs à la cellule en question ;
- stockage desdits blocs de données multimédia communs, et
- duplication (260, 430) desdits blocs de données de service multimédia communs en flux de données de service multimédia séparés pour transmission (270, 440) dans chacune de ladite pluralité de cellules ; et
- transmission de chaque flux de données multimédia dans chacune de ladite pluralité de cellules (6a-h) à l'heure indiquée dans la trame de données unique pour chaque cellule.

6. Procédé dans un dispositif de station de base, selon la revendication 5, **caractérisé en ce que** la transmission desdits blocs de service multimédia communs est programmée selon une programmation commune.

7. Procédé dans un dispositif de station de base, selon la revendication 5 ou 6, **caractérisé en ce que** ladite trame de données unique transportant lesdits blocs de données de service multimédia communs sur l'interface Iub est une trame de données de service multimédia, qui est transmise sur l'interface Iub en liaison avec une trame de données FACH hors service multimédia pourvue d'un indicateur pour ladite trame de données de service multimédia.

8. Procédé dans un dispositif de station de base, selon la revendication 5 ou 6, **caractérisé en ce que** ladite trame de données unique transportant lesdits blocs de données de service multimédia communs sur l'interface Iub est une trame de données FACH étendue.

9. Procédé selon l'une quelconque des revendications précédentes, dans lequel ledit réseau d'accès radio est un réseau UTRAN (réseau universel d'accès radioterrestre), ledit service multimédia est un service de diffusion et de multidiffusion multimédia (MBMS) selon la norme 3GPP, et ledit dispositif de station de base est un noeud B de la 3GPP.

10. Contrôleur de réseau radio (RNC) (4a-c) dans un réseau d'accès radio (3) agencé pour communiquer sur une interface Iub (9) avec un dispositif de station de base (5a-e) desservant une pluralité de cellules (6a-h), le contrôleur de réseau radio comprenant des moyens pour transmettre des blocs de données de service multimédia communs à des terminaux mobiles reliés par un service multimédia (7) situés dans lesdites cellules, comprenant :
- des moyens pour stocker lesdits blocs de données de service multimédia communs dans une trame de données unique, et
- des moyens pour transmettre ladite trame de données unique sur l'interface Iub au dispositif de station de base pour duplication et transmission dans chacune desdites cellules ; **caractérisé en ce que** :
le contrôleur de réseau radio (4a-c) est conçu pour inclure dans la trame de données unique, séparément pour chacune de ladite pluralité de cellules, une heure pour envoyer les blocs de service multimédia communs à la cellule en question.

11. Contrôleur de réseau radio selon la revendication 10, **caractérisé en ce que** la transmission desdits blocs de service multimédia communs est programmée selon une programmation commune.

12. Contrôleur de réseau radio selon la revendication 10 ou 11, **caractérisé en ce que** ladite trame de données unique est une trame de données de service multimédia adaptée pour être transmise sur l'interface Iub en liaison avec une trame de données FACH pourvue d'un indicateur pour ladite trame de données de service multimédia.

13. Contrôleur de réseau radio selon la revendication 10 ou 11, **caractérisé en ce que** ladite trame de données unique est une trame de données FACH étendue.

14. Contrôleur de réseau radio selon l'une quelconque des revendications 10-13, dans lequel ledit réseau d'accès radio est un réseau UTRAN (réseau universel d'accès radioterrestre), et ledit service multimédia est un service de diffusion et de multidiffusion multimédia selon la norme 3GPP, et ledit dispositif de station de base est un noeud B de la 3GPP.

15. Dispositif de station de base (5a-e) desservant une pluralité de cellules (6a-h) dans un réseau d'accès radio (3) et agencé pour communiquer sur une interface Iub (9) avec un contrôleur de réseau radio (RNC) (4a-c), le dispositif de station de base comprenant des moyens pour recevoir des blocs de données de service multimédia depuis ledit contrôleur de réseau radio et pour transmettre un flux de données de service multimédia à des terminaux mobiles reliés par un service multimédia (7) situés dans lesdites cellules, comprenant :
- des moyens pour recevoir une trame de données unique comprenant des blocs de service multimédia communs transférés sur l'interface Iub, et
- des moyens pour créer des flux de données de service multimédia séparés comprenant lesdits blocs de service multimédia communs pour transmission dans chacune desdites cellules ; **caractérisé en ce que**
la trame de données unique comprend, séparément pour chacune de ladite pluralité de cellules, une heure pour envoyer les blocs de service multimédia communs à la cellule en question, et **en ce que** le dispositif de station de base (5a-e) est conçu pour transmettre chaque flux de données multimédia dans chacune de ladite pluralité de cellules à l'heure indiquée dans la trame de données unique.

16. Dispositif de station de base selon la revendication 15, **caractérisé en ce que** la transmission desdits blocs de service multimédia communs est programmée selon une programmation commune.

17. Dispositif de station de base selon la revendication 15 ou 16, **caractérisé en ce que** ladite trame de données unique est une trame de données de service multimédia adaptée pour être transmise sur l'interface Iub en liaison avec une trame de données FACH pourvue d'un indicateur pour ladite trame de données de service multimédia.

18. Dispositif de station de base selon la revendication 15 ou 16, **caractérisé en ce que** ladite trame de données unique est une trame de données FACH étendue.

19. Dispositif de station de base selon l'une quelconque des revendications 15 à 18, dans lequel ledit dispositif de station de base est un noeud B de la 3GPP, ledit réseau d'accès radio est un réseau UTRAN (réseau universel d'accès radioterrestre), et ledit service multimédia est un service de diffusion et de multidiffusion multimédia selon la norme 3GPP.
